(19) Europäisches Patentamt
European Patent Office
Office européen des brevets

(11) EP 3 431 543 A1

(12) **EUROPEAN PATENT APPLICATION**
published in accordance with Art. 153(4) EPC

(43) Date of publication:
**23.01.2019 Bulletin 2019/04**

(21) Application number: **17774331.7**

(22) Date of filing: **15.03.2017**

(51) Int Cl.:
***C08L 21/00*** *(2006.01)* ***B60C 1/00*** *(2006.01)*
***C08K 3/00*** *(2018.01)* ***C08K 7/02*** *(2006.01)*
***C08L 1/00*** *(2006.01)* ***C08L 21/02*** *(2006.01)*

(86) International application number:
**PCT/JP2017/010416**

(87) International publication number:
**WO 2017/169787 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2016 JP 2016071812**

(71) Applicants:
- **Sumitomo Rubber Industries, Ltd.**
  **Kobe-shi, Hyogo 651-0072 (JP)**
- **Nippon Paper Industries Co., Ltd.**
  **Tokyo 114-0002 (JP)**

(72) Inventors:
- **MIYAZAKI, Sumiko**
  **Kobe-shi**
  **Hyogo 651-0072 (JP)**
- **WATANABE, Kenya**
  **Kobe-shi**
  **Hyogo 651-0072 (JP)**
- **KAWASAKI, Takafumi**
  **Tokyo 114-0002 (JP)**
- **ITO, Kotaro**
  **Tokyo 114-0002 (JP)**

(74) Representative: **Manitz Finsterwald Patentanwälte PartmbB**
**Martin-Greif-Strasse 1**
**80336 München (DE)**

# (54) RUBBER COMPOSITION AND PNEUMATIC TIRE

(57) The present invention aims to provide a rubber composition which has further enhanced dispersion of microfibrillated cellulose in rubber to provide excellent processability and further to provide excellent rigidity, tensile properties, and fuel economy while maintaining a good balance between them. The present invention also aims to provide a pneumatic tire formed from the rubber composition with high productivity which provides excellent handling stability, durability, and rolling resistance properties while maintaining a good balance between them. The rubber composition of the present invention contains: a rubber component; a chemically modified microfibrillated cellulose; and a filler, the chemically modified microfibrillated cellulose having a structure in which the hydroxyl hydrogen atoms of microfibrillated cellulose are partly substituted with a cationic group of a cationic group-containing compound.

EP 3 431 543 A1

**Description**

TECHNICAL FIELD

The present invention relates to a rubber composition and a pneumatic tire formed from the rubber composition.

BACKGROUND ART

Heretofore known techniques for improving handling stability involve reinforcing rubber with short fibers such as aramid or cellulose or with crystalline polymers such as syndiotactic polybutadiene to improve its hardness and modulus, e.g. complex modulus (E*) at 70°C (see, for example, Patent Literature 1). However, even though the modulus is improved, all of the properties required for use in tires, excluding handling stability, are not always improved.

Patent Literature 1 proposes a rubber composition formed of a diene rubber component, starch, and cellulose with the aim of providing a rubber composition excellent in abrasion resistance, and also proposes the use in particular of bacterial cellulose as the cellulose. The technique of Patent Literature 1, however, has the problems of poor tensile properties and large energy loss at the interface between the rubber and the cellulose due to the poor compatibility between the rubber and the cellulose.

Patent Literature 2 discloses a rubber composition that may incorporate a diene rubber with a fine cellulose fiber powder prepared from natural plant fibers to achieve both low resilience and rigidity (handling stability). Unfortunately, the technique of Patent Literature 2 still has room for improvement in obtaining rigidity and reinforcing properties commensurate with the amount of added cellulose fibers because the cellulose fibers thus prepared have a short fiber length.

Moreover, it has been reported that since cellulose fibers having a number average fiber diameter of 1 μm or less in which the cellulose is a modified cellulose having a cationic group and an optionally substituted acyl group and/or an optionally substituted alkyl group are compatible with resins and also excellent in dispersibility in solvents and fibrillation, rubber compositions containing such cellulose fibers are excellent in various properties, and tires formed from the rubber compositions provide excellent physical properties and fuel economy (see, for example, Patent Literature 3).

Furthermore, a composite of a cationic group-containing microfibrillated cellulose and a resin is disclosed (see, for example, Patent Literature 4). Although such cationic group-containing cellulose fibers can be easily finely divided, they are not sufficiently compatible with resins. Therefore, the physical properties of the fiber-resin composite may unfortunately be not improved in some cases.

As described above, cellulose fibers and rubber compositions containing cellulose fibers have been developed, and the use of cationic group-containing cellulose fibers has also been studied. However, the cationic group-containing cellulose fibers in these conventional rubber compositions still have unsatisfactory dispersion in rubber, and the physical properties of the rubber compositions also leave room for further improvement.

CITATION LIST

PATENT LITERATURE

Patent Literature 1: JP 2005-133025 A
Patent Literature 2: JP 2005-75856 A
Patent Literature 3: JP 2014-218598 A
Patent Literature 4: JP 2011-162608 A

SUMMARY OF INVENTION

TECHNICAL PROBLEM

The present invention aims to solve the problem and provide a rubber composition which has further enhanced dispersion of microfibrillated cellulose in rubber to provide excellent processability and further to provide excellent rigidity, tensile properties, and fuel economy while maintaining a good balance between them. The present invention also aims to provide a pneumatic tire formed from the rubber composition with high productivity which provides excellent handling stability, durability, and rolling resistance properties while maintaining a good balance between them.

## SOLUTION TO PROBLEM

The present invention relates to a rubber composition, containing: a rubber component; a chemically modified microfibrillated cellulose; and a filler, the chemically modified microfibrillated cellulose having a structure in which hydroxyl hydrogen atoms of microfibrillated cellulose are partly substituted with a cationic group of a cationic group-containing compound.

The chemically modified microfibrillated cellulose preferably has a degree of substitution with the cationic group of 0.01 to 0.5.

The filler is preferably present in an amount of 5 to 200 parts by mass per 100 parts by mass of the rubber component.

The chemically modified microfibrillated cellulose is preferably present in an amount of 0.5 to 20 parts by mass per 100 parts by mass of the rubber component.

The chemically modified microfibrillated cellulose preferably has an average fiber length of not less than 100 nm but not more than 5 $\mu$m.

The chemically modified microfibrillated cellulose preferably has an average fiber diameter of 2 to 500 nm.

The present invention also relates to a pneumatic tire, formed from the rubber composition.

## ADVANTAGEOUS EFFECTS OF INVENTION

According to the present invention, a rubber composition is provided which has further enhanced dispersion of microfibrillated cellulose in rubber to provide excellent processability and further to provide excellent rigidity, tensile properties, and fuel economy while maintaining a good balance between them. It is also possible to provide a pneumatic tire formed from the rubber composition with high productivity which provides excellent handling stability, durability, and rolling resistance properties while maintaining a good balance between them. A further advantage is that, in general, when microfibrillated celluloses are incorporated in rubber compositions, the microfibrillated celluloses are aligned in the extrusion direction (machine direction, corresponding to the circumferential direction of the tire), and therefore the rigidity in the extrusion direction is improved, whereas the rigidity in the direction orthogonal to the extrusion direction (corresponding to the radial direction of the tire) is not much improved; in contrast, according to the present invention, excellent rigidity is achieved not only in the tire circumferential direction but also in the tire radial direction, and therefore the resulting pneumatic tire has very excellent handling stability. This effect seems due to the good dispersion of the microfibrillated cellulose in rubber.

## DESCRIPTION OF EMBODIMENTS

The rubber composition of the present invention contains a rubber component, a chemically modified microfibrillated cellulose, and a filler. The chemically modified microfibrillated cellulose has a structure in which the hydroxyl hydrogen atoms of microfibrillated cellulose are partly substituted with a cationic group of a cationic group-containing compound. The chemically modified microfibrillated cellulose serves as a rubber reinforcing agent. The presence of an introduced cationic group in the chemically modified microfibrillated cellulose strengthens the interface between the rubber and the chemically modified microfibrillated cellulose and also improves the compatibility of the chemically modified microfibrillated cellulose with the rubber.

As a result of various investigations, the present inventors have also found for the first time that when such a chemically modified microfibrillated cellulose containing a cationic group is used in combination with a filler, the dispersion of the chemically modified microfibrillated cellulose in the rubber composition is synergistically improved, and significantly improved compared for example to when using an unmodified microfibrillated cellulose containing no cationic group with a filler. Thus, with a combination of the chemically modified microfibrillated cellulose containing a cationic group with a filler, it is possible to provide a rubber composition which is excellent in processability and further has synergistically excellent rigidity, tensile properties, and fuel economy while maintaining a good balance between them.

As described above, the present inventors are the first to discover that the combined use of the chemically modified microfibrillated cellulose containing a cationic group with a filler synergistically improves the above effects.

Thus, in the rubber composition of the present invention, the specific chemically modified microfibrillated cellulose is highly uniformly dispersed in the rubber composition to produce a stronger interface with the rubber, thereby resulting in significantly reduced energy loss at the interface with the rubber. Moreover, the combined use of the specific chemically modified microfibrillated cellulose with a filler synergistically improves the dispersion of the chemically modified microfibrillated cellulose in the rubber composition. Consequently, the resulting rubber composition is excellent in processability and further has synergistically excellent rigidity, tensile properties, and fuel economy while maintaining a good balance between them. Accordingly, the rubber composition of the present invention may be used to produce a pneumatic tire with high productivity which provides excellent handling stability, durability, and rolling resistance properties while

maintaining a good balance between them.

In addition, since the microfibrillated cellulose is a material that is not made from petroleum, it contributes to reducing the amount of petroleum resources used and is therefore environmentally friendly.

<Rubber component>

The rubber component used in the present invention may be a rubber commonly used in the rubber industry. Preferred examples include diene rubbers such as natural rubber (NR), epoxidized natural rubber (ENR), hydrogenated natural rubber, polyisoprene rubber (IR), polybutadiene rubber (BR), styrene-butadiene rubber (SBR), styrene-isoprene-butadiene rubber (SIBR), acrylonitrile-butadiene rubber (NBR), and chloroprene rubber (CR). The rubber component may include rubbers other than the diene rubbers. Examples of such other rubbers include butyl-based rubbers such as halogenated butyl rubber (X-IIR) and butyl rubber (IIR).

These rubbers may be used alone or in combinations of two or more.

Preferably, the rubber component essentially includes natural rubber. When the rubber component includes natural rubber, the dispersion of the chemically modified microfibrillated cellulose according to the present invention in the rubber composition, which has been significantly improved by the combined use of the chemically modified microfibrillated cellulose and a filler, is further enhanced. Therefore, the effects of the present invention can be more significantly achieved. Also preferably, the effects of the present invention may be significantly achieved by using a combination of natural rubber and polybutadiene rubber in the rubber component.

Non-limiting examples of the natural rubber include those usually used in the rubber industry, such as SIR20, RSS#3, and TSR20.

Non-limiting examples of the polybutadiene rubber (BR) include those usually used in the tire industry, such as high cis content polybutadiene rubbers, e.g. BR1220 available from Zeon Corporation, and BR130B and BR150B both available from Ube Industries, Ltd.; modified polybutadiene rubbers, e.g. BR1250H available from Zeon Corporation; polybutadiene rubbers containing syndiotactic polybutadiene crystals, e.g. VCR412 and VCR617 both available from Ube Industries, Ltd.; and polybutadiene rubbers synthesized with rare earth catalysts, e.g. BUNA-CB25 available from LANXESS. These BRs may be used alone or in combinations of two or more.

The BR preferably has a cis content of 70% by mass or higher, more preferably 90% by mass or higher, still more preferably 97% by mass or higher.

Herein, the cis content (cis-1,4-linkage content) of the BR may be measured by infrared absorption spectrometry.

The amounts of individual rubbers in the rubber component are not particularly limited and may be appropriately chosen. The amount of the natural rubber based on 100% by mass of the rubber component is preferably 5% by mass or more, more preferably 10% by mass or more, further preferably 20% by mass or more. The natural rubber in an amount of less than 5% by mass might not produce its effect as described above. The upper limit of the amount of the natural rubber is not particularly limited and may be 100% by mass.

In the case where the rubber component includes a combination of natural rubber and polybutadiene rubber, the amount of the polybutadiene rubber based on 100% by mass of the rubber component is, for example, preferably 20% by mass or more, more preferably 30% by mass or more, still more preferably 40% by mass or more, but preferably 80% by mass or less, more preferably 70% by mass or less, still more preferably 60% by mass or less.

<Chemically modified microfibrillated cellulose>

Examples of microfibrillated celluloses that may be used as starting materials for the chemically modified microfibrillated cellulose used in the present invention include those derived from at least one selected from natural materials such as wood, bamboo, hemp, jute, kenaf, agricultural crop wastes, cloth, regenerated pulp, used paper, bacterial cellulose, and ascidian cellulose.

The term "microfibrillated cellulose" herein typically refers to cellulose fibers having an average fiber diameter in the range of 2 nm to 1 μm and more typically cellulose fibers having a microstructure with an average fiber diameter of 500 nm or less, formed by aggregation of cellulose molecules. Typically, for example, the microfibrillated cellulose may be formed of aggregates of cellulose fibers having an average fiber diameter as indicated above.

In the present invention, such a naturally occurring microfibrillated cellulose may be used to provide a significant effect in reducing carbon dioxide emissions, whereby the rubber composition of the present invention can be environmentally friendly. Among others, the microfibrillated cellulose is particularly preferably a microfibrillated cellulose derived from at least one selected from the group consisting of wood, bamboo, hemp, jute, kenaf, agricultural crop wastes, cloth, regenerated pulp, and used paper because then the effect of reducing carbon dioxide emissions is achieved well and because of easy availability. These microfibrillated celluloses may be used alone or in combinations of two or more.

The microfibrillated cellulose may be produced by any method, for example, by chemically treating the starting material of the microfibrillated cellulose with a chemical agent such as sodium hydroxide, followed by mechanical grinding

or beating with a refiner, a twin screw kneader (twin screw extruder), a twin screw kneading extruder, a high-pressure homogenizer, a media mill, a stone mill, a grinder, a vibration mill, a sand grinder, or other devices.

Another method may include treating the starting material of the microfibrillated cellulose at a high pressure.

In the present invention, the chemically modified microfibrillated cellulose used in the present invention may be produced by performing a modification reaction as described later using the microfibrillated cellulose as a starting material as described above. Alternatively, the chemically modified microfibrillated cellulose used in the present invention may be produced by performing the modification reaction using a natural material which can be a source of the microfibrillated cellulose, such as wood, pulp, bamboo, hemp, jute, kenaf, agricultural crop wastes, cloth, regenerated pulp, used paper, bacterial cellulose, or ascidian cellulose, as a cellulose starting material, optionally followed by fibrillation.

The chemically modified microfibrillated cellulose used in the present invention has a structure in which the hydroxyl hydrogen atoms of microfibrillated cellulose are partly substituted with a cationic group of a cationic group-containing compound.

The term "structure in which the hydroxyl hydrogen atoms of microfibrillated cellulose are partly substituted with a cationic group of a cationic group-containing compound" herein refers to a structure obtained by reacting microfibrillated cellulose with a cationic group-containing compound to substitute part of the hydroxyl hydrogen atoms of the microfibrillated cellulose by a substituent derived from the cationic group-containing compound.

The chemically modified microfibrillated cellulose used in the present invention, which has a structure in which the hydroxyl hydrogen atoms of microfibrillated cellulose are partly substituted with a cationic group of a cationic group-containing compound, is not particularly limited as long as at least part of the hydroxyl hydrogen atoms of microfibrillated cellulose is substituted with a cationic group of a cationic group-containing compound. It may have a structure in which all the hydroxyl hydrogen atoms of microfibrillated cellulose are substituted with a cationic group of a cationic group-containing compound.

The chemically modified microfibrillated cellulose may be a single type or a combination of two or more types of chemically modified microfibrillated celluloses. Exemplary embodiments of the combination of two or more types include combinations of chemically modified microfibrillated celluloses which differ in the type of cationic group, the type of cationic group-containing compound, the type of microfibrillated cellulose starting material, average fiber diameter, average fiber length, or other conditions.

The cationic group-containing compound will be described in detail below.

Examples of the cationic group in the cationic group-containing compound include an ammonium group, a phosphonium group, a sulfonium group, and groups containing ammonium, phosphonium, and/or sulfonium groups. In view of easy availability and reaction yield, ammonium-containing groups are preferred among these, with quaternary ammonium-containing groups being particularly preferred.

The chemically modified microfibrillated cellulose in the present invention may have only one type or two or more types of cationic groups.

The chemically modified microfibrillated cellulose in the present invention may contain additional functional groups as long as it contains the cationic group.

Suitable examples of the ammonium-containing groups include groups represented by the following formula (1):

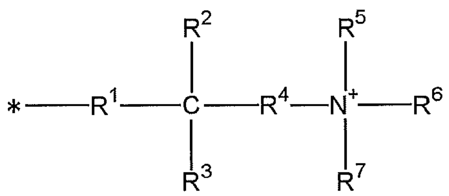

(1)

wherein $R^1$ and $R^4$ are the same or different and each represent a linear or branched C1-C5 alkylene group; $R^2$ and $R^3$ are the same or different and each represent a hydrogen atom, a hydroxyl group, or a linear or branched C1-C5 alkyl group; $R^5$, $R^6$, and $R^7$ are the same or different and each represent a hydrogen atom or a linear or branched C1-C5 alkyl group; and the symbol * represents a bond.

$R^1$ and $R^4$ in formula (1) are the same or different and each represent a linear or branched C1-C5, preferably C1-C3, more preferably C1-C2 alkylene group. Specific examples of the alkylene group include methylene, ethylene, n-propylene, isopropylene, n-butylene, isobutylene, s-butylene, t-butylene, n-pentylene, 1-methyl-n-butylene, 2-methyl-n-butylene, 3-methyl-n-butylene, 1,1-dimethyl-n-propylene, 1,2-dimethyl-n-propylene, 2,2-dimethyl-n-propylene, and 1-ethyl-n-propylene groups.

Among these, $R^1$ is preferably a methylene group, an ethylene group, an n-propylene group, or an isopropylene group, more preferably a methylene group or an ethylene group, particularly preferably a methylene group.

$R^4$ is preferably a methylene group, an ethylene group, an n-propylene group, or an isopropylene group, more

preferably a methylene group or an ethylene group, particularly preferably a methylene group.

$R^2$ and $R^3$ in formula (1) are the same or different and each represent a hydrogen atom, a hydroxyl group, or a linear or branched C1-C5, preferably C1-C3, more preferably C1-C2 alkyl group. Specific examples of the alkyl group include methyl, ethyl, n-propyl, isopropyl, n-butyl, isobutyl, s-butyl, t-butyl, n-pentyl, 1-methyl-n-butyl, 2-methyl-n-butyl, 3-methyl-n-butyl, 1,1-dimethyl-n-propyl, 1,2-dimethyl-n-propyl, 2,2-dimethyl-n-propyl, and 1-ethyl-n-propyl groups.

In a particularly preferred embodiment, one of $R^2$ and $R^3$ groups is a hydrogen atom and the other is a hydroxyl group.

$R^5$, $R^6$, and $R^7$ in formula (1) are the same or different and each represent a hydrogen atom or a linear or branched C1-C5, preferably C1-C3, more preferably C1-C2 alkyl group. Specific examples of the alkyl group include those as listed above.

Preferably, at least one of $R^5$, $R^6$, and $R^7$ groups is a linear or branched C1-C5, preferably C1-C3, more preferably C1-C2 alkyl group. More preferably, all $R^5$, $R^6$, and $R^7$ groups are linear or branched C1-C5, preferably C1-C3, more preferably C1-C2 alkyl groups. Still more preferably, they are the same or different and each is a methyl group, an ethyl group, an n-propyl group, or an isopropyl group, further preferably a methyl group or an ethyl group. Particularly preferably, all $R^5$, $R^6$, and $R^7$ groups are methyl groups.

The degree of substitution (DS) with the cationic group of the chemically modified microfibrillated cellulose is preferably 0.01 to 0.5 from the standpoint of uniformly dispersing highly hydrophilic microfibrillated cellulose in a highly hydrophobic matrix such as a rubber component and of improving the water resistance of microfibrillated cellulose. The degree of substitution is more preferably 0.02 or higher, still more preferably 0.03 or higher, but is more preferably 0.4 or lower, still more preferably 0.3 or lower, further more preferably 0.2 or lower, particularly preferably 0.1 or lower. When the degree of substitution with the cationic group of the chemically modified microfibrillated cellulose is within the range indicated above, particularly good elastic modulus, especially in the tire circumferential direction, can be obtained.

The degree of substitution may be controlled by changing the amount of the cationic group-containing compound (modifier) or the compositional ratio of water and/or alcohol as described later.

The degree of substitution with the cationic group (degree of cation substitution) of the chemically modified microfibrillated cellulose refers to the number per glucose ring unit of hydroxyl groups substituted with the cationic group by chemical modification with the cationic group-containing compound, among the hydroxyl groups of cellulose. Namely, it is the number of substituents (cationic groups) introduced per unit structure (glucopyranose ring) of cellulose. In other words, the degree of substitution is defined as "the quotient obtained by dividing the number of moles of introduced substituents by the number of moles of glucopyranose rings". Since one unit structure (glucopyranose ring) of pure cellulose has three substitutable hydroxyl groups, the theoretical maximum of the degree of substitution with the cationic group is three (while the minimum is zero).

In the case of the chemically modified microfibrillated cellulose consisting of a combination of two or more types, the degree of substitution is calculated as the average of all the chemically modified microfibrillated celluloses.

The degree of substitution (DS) may be determined after removal of by-products, etc., from the chemically modified microfibrillated cellulose by quantifying the element contained in the cationic group by elemental analysis or quantifying the peaks corresponding to the characteristic molecular structure of the cationic group by $^1$H-NMR, $^{13}$C-NMR, or other analyses.

A more specific example of a method for determining the degree of substitution (DS) is described below.

A sample (e.g. a chemically modified microfibrillated cellulose that has been modified with 3-chloro-2-hydroxypropyltrimethylammonium chloride) is dried, and the nitrogen content of the dried sample is measured using a total nitrogen analyzer TN-10 (Mitsubishi Chemical Corp.). The degree of substitution is calculated using the equation below. The term "degree of substitution" refers to the average number of moles of substituents per mole of anhydroglucose unit (the average number of moles of substituents (cationic groups) introduced per mole of glucopyranose ring).

$$\text{Degree of cation substitution} = (162 \times N)/(1 - 116 \times N)$$

where N: nitrogen content

Since the chemically modified microfibrillated cellulose used in the present invention has a structure in which the hydroxyl groups of the cellulose forming microfibrillated cellulose are partly substituted with a cationic group of a cationic group-containing compound, the chemically modified microfibrillated cellulose can be dispersed well in a highly hydrophobic matrix such as a rubber component.

The chemically modified microfibrillated cellulose preferably has an average fiber diameter of 2 nm or more. An average fiber diameter of 2 nm or more is advantageous in that the surface texture becomes smooth, and the strength after compounding with the rubber is improved. The average fiber diameter is more preferably 4 nm or more, further preferably 10 nm or more, particularly preferably 20 nm or more.

The chemically modified microfibrillated cellulose also preferably has an average fiber diameter of 1 μm or less. An average fiber diameter of 1 μm or less is advantageous in that: the compatibility between the rubber and the chemically modified microfibrillated cellulose is particularly good and the effect of reducing energy loss at the interface between the rubber and the chemically modified microfibrillated cellulose is significant; a higher reinforcing effect is produced due to the improved elastic modulus; and the compatibility with the rubber is improved by virtue of the chemically modified surface . The average fiber diameter is more preferably 500 nm or less, still more preferably 200 nm or less, particularly preferably 100 nm or less.

In the case of the chemically modified microfibrillated cellulose consisting of a combination of two or more types, the average fiber diameter is calculated as the average of all the chemically modified microfibrillated celluloses.

The average fiber diameter herein may be measured by image analysis using scanning electron micrographs, image analysis using transmission electron micrographs, image analysis using atomic force micrographs, X-ray scattering data analysis, or the like.

The chemically modified microfibrillated cellulose preferably has an average fiber length of 5 μm or less, more preferably 3 μm or less, still more preferably 2 μm or less, but preferably 100 nm or more, more preferably 300 nm or more, still more preferably 500 nm or more. The chemically modified microfibrillated cellulose having an average fiber length within the range indicated above provides good tensile properties.

In the case of the chemically modified microfibrillated cellulose consisting of a combination of two or more types, the average fiber length is calculated as the average of all the chemically modified microfibrillated celluloses.

The average fiber length herein may be measured by image analysis using scanning electron micrographs, image analysis using transmission electron micrographs, image analysis using atomic force micrographs, X-ray scattering data analysis, or the like.

The chemically modified microfibrillated cellulose preferably has an average aspect ratio of 5 or higher. The upper limit is not particularly limited, but is preferably, for example, 1000 or lower.

The average aspect ratio may be calculated by the following equation.

Average aspect ratio = (average fiber length)/(average fiber diameter)

The chemically modified microfibrillated cellulose is essential in the present invention. In addition to the chemically modified microfibrillated cellulose, a non-chemically-modified microfibrillated cellulose (e.g. a microfibrillated cellulose used as a starting material for the chemically modified microfibrillated cellulose in the present invention) may be used in combination as long as the effects of the present invention are not impaired.

The amount of the chemically modified microfibrillated cellulose per 100 parts by mass of the rubber component is preferably within a range of 0.5 to 20 parts by mass. When the amount of the chemically modified microfibrillated cellulose is 0.5 parts by mass or more, the reinforcing effect and the elastic modulus-improving effect of the added chemically modified microfibrillated cellulose are particularly good. An amount of 20 parts by mass or less is advantageous in that the dispersion of the chemically modified microfibrillated cellulose in the rubber is less likely to be deteriorated. The amount of the chemically modified microfibrillated cellulose per 100 parts by mass of the rubber component is more preferably 1 part by mass or more, still more preferably 5 parts by mass or more, particularly preferably 7 parts by mass or more, but is more preferably 15 parts by mass or less, still more preferably 10 parts by mass or less.

The chemically modified microfibrillated cellulose may be produced, for example, by modifying the above-mentioned microfibrillated cellulose as a starting material with a cationic group-containing compound (modifier) or by modifying a natural material which can be a source of the microfibrillated cellulose, such as wood, pulp, bamboo, hemp, jute, kenaf, agricultural crop wastes, cloth, regenerated pulp, used paper, bacterial cellulose, or ascidian cellulose, as a cellulose starting material with a cationic group-containing compound (modifier), optionally followed by fibrillation.

Examples of the modifier include compounds containing the cationic group and a group reactive with the hydroxyl groups of cellulose.

The group reactive with the hydroxyl groups of cellulose may be any reactive group capable of reacting with the hydroxyl groups to form covalent bonds. Examples include an epoxy group or a halohydrin group which can form an epoxy group, an active halogen group, an active vinyl group, and a methylol group. In view of reactivity, an epoxy group or a halohydrin group which can form an epoxy group is preferred among these.

Specific examples of the modifier include compounds containing ammonium-containing groups such as glycidyltrialkylammonium halides and their halohydrins, e.g.

glycidyltrimethylammonium chloride and

3-chloro-2-hydroxypropyltrimethylammonium chloride; compounds containing phosphonium-containing

groups, such as glycidyl trimethyl phosphonium, triethyl glycidyl phosphonium, glycidyl tripropyl phosphonium, glycidyl triisopropyl phosphonium, tributyl glycidyl phosphonium, and glycidyl triphenyl phosphonium; and compounds containing sulfonium-containing groups, such as glycidyl dimethyl sulfonium, dibutyl glycidyl sulfonium, and glycidyl diphenyl sulfonium. In view of easy availability and reaction yield, compounds containing ammonium-containing groups are preferred among these, with glycidyltrialkylammonium halides and their halohydrins being more preferred, with glycidyltrimethylammonium chloride or 3-chloro-2-hydroxypropyltrimethylammonium chloride being particularly preferred.

These modifiers may be used alone or in combinations of two or more.

As a result of the reaction between the modifier and the microfibrillated cellulose or the cellulose starting material, the hydroxyl hydrogen atoms of the cellulose forming the microfibrillated cellulose or the cellulose starting material are partly substituted with a substituent derived from the modifier (cationic group-containing compound).

The amount of the modifier used to modify the microfibrillated cellulose or the cellulose starting material, per 100% by mass of the microfibrillated cellulose or the cellulose starting material, is preferably 5% by mass or more, more preferably 10% by mass or more, but is preferably 800% by mass or less, more preferably 500% by mass or less.

The reaction between the modifier and the microfibrillated cellulose or the cellulose starting material may be carried out by adding an excess of the modifier to the microfibrillated cellulose or the cellulose starting material and reacting them until a predetermined degree of substitution is obtained, followed by termination of the reaction, or may be carried out by adding the minimum necessary amount of the modifier to the microfibrillated cellulose or the cellulose starting material and controlling reaction time, temperature, solvent, catalyst loading, or other conditions to react them until a predetermined degree of substitution is obtained.

The reaction for modification of the microfibrillated cellulose or the cellulose starting material with the modifier can be allowed to proceed to some extent by heating, even without the use of a catalyst, as long as dehydration is adequately conducted. Nevertheless, it is preferred to use a catalyst because the microfibrillated cellulose or the cellulose starting material can be modified with high efficiency under milder conditions.

Examples of the catalyst used to modify the microfibrillated cellulose or the cellulose starting material include alkali metal hydroxides such as sodium hydroxide and potassium hydroxide.

These catalysts may be used alone or in combinations of two or more.

The amount of the catalyst per 100% by mass of the microfibrillated cellulose or the cellulose starting material is preferably 0.5% by mass or more, more preferably 1% by mass or more, but is preferably 20% by mass or less, more preferably 15% by mass or less, still more preferably 7% by mass or less, particularly preferably 3% by mass or less.

An excess of the catalyst may be added to the microfibrillated cellulose or the cellulose starting material, and reacted until a predetermined degree of substitution is obtained, followed by termination of the reaction. Alternatively, the minimum necessary amount of the catalyst may be added to the microfibrillated cellulose or the cellulose starting material, followed by controlling reaction time, temperature, solvent, or other conditions to react them until a predetermined degree of substitution is obtained. After the reaction, the catalyst is usually preferably removed by washing, distillation, or the like.

The reaction temperature for the modification of the microfibrillated cellulose or the cellulose starting material with the modifier is preferably 10°C or higher, more preferably 30°C or higher, but is preferably 90°C or lower, more preferably 80°C or lower. A higher temperature is preferred because the efficiency of the reaction for modification of the microfibrillated cellulose or the cellulose starting material is enhanced. Too high a temperature, however, may partially degrade the microfibrillated cellulose or the cellulose starting material. Hence, the temperature range as indicated above is preferred.

The reaction time for the modification of the microfibrillated cellulose or the cellulose starting material with the modifier is preferably 10 minutes or longer, more preferably 30 minutes or longer, but is preferably 10 hours or shorter, more preferably 5 hours or shorter.

The reaction between the modifier and the microfibrillated cellulose or the cellulose starting material is preferably performed in the presence of a water and/or alcohol solvent.

Examples of the alcohol include C1-C4 alcohols such as methanol, ethanol, n-propyl alcohol, isopropyl alcohol, and n-butanol. The water or alcohol may be used alone, or two or more types thereof may be used in combination. The water and alcohol may be used in admixture.

The amount of the water and/or alcohol solvent per 100% by mass of the microfibrillated cellulose or the cellulose starting material is preferably 50% by mass or more, more preferably 100% by mass or more, but is preferably 50000% by mass or less, more preferably 500% by mass or less.

The reaction between the modifier and the microfibrillated cellulose or the cellulose starting material may be carried out with stirring of the reaction solution, if necessary.

When the chemically modified microfibrillated cellulose used in the present invention is produced by modifying the cellulose starting material (natural material which can be a source of the microfibrillated cellulose, such as wood, pulp, bamboo, hemp, jute, kenaf, agricultural crop wastes, cloth, regenerated pulp, used paper, bacterial cellulose, or ascidian cellulose) with the cationic group-containing compound (modifier), the modification reaction is preferably followed

by fibrillation. With the fibrillation, it is possible to appropriately adjust the fiber diameter of the chemically modified microfibrillated cellulose.

The fibrillation may be carried out by any method, such as, for example, by mechanically grinding or beating the cellulose starting material modified with the modifier as described above using a refiner, a twin screw kneader (twin screw extruder), a twin screw kneading extruder, a high-pressure homogenizer, a media mill, a stone mill, a grinder, a vibration mill, a sand grinder, or other devices. Another method may include ultrahigh pressure treatment of the cellulose starting material modified with the modifier.

When the chemically modified microfibrillated cellulose used in the present invention is produced by modifying the cellulose starting material with the cationic group-containing compound (modifier), the modification reaction may be followed by a viscosity-reducing treatment. With the viscosity-reducing treatment, it is possible to appropriately adjust the fiber length of the chemically modified microfibrillated cellulose.

The viscosity-reducing treatment may be carried out by conventionally known methods. Examples of such methods include, but are not limited, hydrolysis by adding an alkali (e.g. sodium hydroxide) and/or an oxidizing agent (e.g. hydrogen peroxide).

<Filler>

The rubber composition of the present invention contains a filler. The addition of a filler produces a reinforcing effect. In addition, surprisingly, by combining the chemically modified microfibrillated cellulose with the filler, it is possible to synergistically and significantly improve the dispersion of the chemically modified microfibrillated cellulose in the rubber composition.

Examples of the filler include those usually used in rubber compositions for tires, such as carbon black, silica, calcium carbonate, alumina, clay, and talc. These fillers may be used alone or in combinations of two or more. In order to more suitably achieve the synergistic effect with the chemically modified microfibrillated cellulose according to the present invention, the filler is preferably carbon black and/or silica, among others.

Non-limiting examples of the carbon black include GPF, FEF, HAF, ISAF, and SAF. These types of carbon black may be used alone or in combinations of two or more.

The carbon black preferably has a nitrogen adsorption specific surface area ($N_2SA$) of 20 $m^2/g$ or more, more preferably 25 $m^2/g$ or more. The $N_2SA$ is also preferably 200 $m^2/g$ or less, more preferably 150 $m^2/g$ or less, still more preferably 120 $m^2/g$ or less. When the $N_2SA$ of the carbon black is within the range indicated above, the effects of the present invention can be more significantly achieved. A $N_2SA$ of less than 20 $m^2/g$ tends not to lead to a sufficient reinforcing effect. A $N_2SA$ of more than 200 $m^2/g$ tends to result in reduced fuel economy.

Herein, the $N_2SA$ of the carbon black is determined in accordance with JIS K6217-2:2001.

The carbon black preferably has a dibutyl phthalate oil absorption (DBP) of 50 mL/100 g or more, more preferably 110 mL/100 g or more. A DBP of less than 50 mL/100 g may not lead to sufficient reinforcing properties. The DBP is also preferably 200 mL/100 g or less, more preferably 135 mL/100 g or less. A DBP of more than 200 mL/100 g may result in reduced processability.

Herein, the DBP of the carbon black is determined in accordance with JIS K6217-4:2001.

Examples of the silica include dry silica (anhydrous silica) and wet silica (hydrous silica). Among these, wet silica is preferred because it has a large number of silanol groups.

The silica preferably has a nitrogen adsorption specific surface area ($N_2SA$) of 40 $m^2/g$ or more, more preferably 70 $m^2/g$ or more, still more preferably 110 $m^2/g$ or more. A $N_2SA$ of less than 40 $m^2/g$ tends to lead to reduced tensile strength. The $N_2SA$ is also preferably 220 $m^2/g$ or less, more preferably 200 $m^2/g$ or less. Silica having a $N_2SA$ of more than 220 $m^2/g$ may be difficult to disperse, thereby deteriorating processability.

Herein, the $N_2SA$ of the silica is determined by the BET method in accordance with ASTM D3037-93.

The amount of the filler per 100 parts by mass of the rubber component is preferably 5 to 200 parts by mass, more preferably 10 parts by mass or more, still more preferably 20 parts by mass or more, particularly preferably 30 parts by mass or more, but is more preferably 150 parts by mass or less, still more preferably 100 parts by mass or less, particularly preferably 70 parts by mass or less. An amount within the range indicated above provides better fuel economy.

Particularly in the case where the filler includes carbon black, the amount of the carbon black per 100 parts by mass of the rubber component is preferably 5 parts by mass or more, more preferably 10 parts by mass or more, still more preferably 20 parts by mass or more, particularly preferably 30 parts by mass or more, but is preferably 200 parts by mass or less, more preferably 150 parts by mass or less, still more preferably 100 parts by mass or less, particularly preferably 70 parts by mass or less. An amount within the range indicated above provides good fuel economy.

Particularly in the case where the filler includes silica, the amount of the silica per 100 parts by mass of the rubber component is preferably 5 parts by mass or more, more preferably 10 parts by mass or more, still more preferably 20 parts by mass or more, particularly preferably 30 parts by mass or more, but is preferably 200 parts by mass or less, more preferably 150 parts by mass or less, still more preferably 100 parts by mass or less, particularly preferably 70

parts by mass or less. An amount within the range indicated above provides good fuel economy.

<Other compounding agents>

In addition to the above-mentioned components, the rubber composition of the present invention may contain other compounding agents conventionally used in the rubber industry, such as silane coupling agents, vulcanizing agents, vulcanization accelerators, vulcanization accelerator aids, oils, curable resins, waxes, and antioxidants.

<Method for preparing rubber composition>

The rubber composition of the present invention may be prepared by mixing a rubber component, the chemically modified microfibrillated cellulose, a filler, and other necessary compounding agents by a conventionally known method using, for example, a rubber kneading machine, and vulcanizing the mixture in a conventionally known manner. Thus, another aspect of the present invention is a method for preparing the rubber composition which includes the step of mixing a rubber component, the chemically modified microfibrillated cellulose, and a filler. In the preparation, for example, preferably, the chemically modified microfibrillated cellulose is preliminarily mixed with a rubber component, followed by mixing with a filler and other necessary compounding agents. In the mixing with a filler and other necessary compounding agents after preliminary mixing of the chemically modified microfibrillated cellulose and a rubber component, an additional rubber component may be mixed.

Thus, another aspect of the present invention is the method for preparing the rubber composition which includes a step (I) of preliminarily mixing the chemically modified microfibrillated cellulose with a rubber component.

In the step (I), the chemically modified microfibrillated cellulose is mixed with a rubber component. The preliminary mixing of the chemically modified microfibrillated cellulose with a rubber component allows the chemically modified microfibrillated cellulose to be more uniformly dispersed in the rubber composition. For easy mixing of the chemically modified microfibrillated cellulose with a rubber component, the chemically modified microfibrillated cellulose is preferably mixed with a rubber component in a solvent such as water in the step.

In the step (I), a solvent dispersion (particularly preferably an aqueous dispersion) of the chemically modified microfibrillated cellulose is preferably used. The chemically modified microfibrillated cellulose in this form can be uniformly mixed with a rubber component in a short time. The amount (solids content) of the chemically modified microfibrillated cellulose in the dispersion of the chemically modified microfibrillated cellulose (100% by mass) is preferably 0.1 to 40% by mass, more preferably 0.5 to 30% by mass.

The dispersion of the chemically modified microfibrillated cellulose may be prepared by known methods. Non-limiting examples of such preparation methods include dispersing the chemically modified microfibrillated cellulose in a solvent such as water using a high-pressure homogenizer, an ultrasonic homogenizer, a colloid mill, or other devices.

In the step (I), the rubber component is preferably a rubber latex. The rubber component in this form can be more uniformly mixed with the chemically modified microfibrillated cellulose in a short time.

Examples of the rubber latex include latexes of the above-listed rubbers. Specific suitable examples include diene rubber latexes such as natural rubber latex and synthetic diene rubber latexes (latexes of polybutadiene rubber (BR), styrene-butadiene rubber (SBR), styrene-isoprene-butadiene rubber (SIBR), polyisoprene rubber, acrylonitrile butadiene rubber, ethylene vinyl acetate rubber, chloroprene rubber, vinylpyridine rubber, butyl rubber, etc.). Thus, in another suitable embodiment of the present invention, the rubber latex is a diene rubber latex. These rubber latexes may be used alone or in combinations of two or more. To more suitably achieve the effects of the present invention, natural rubber latex, SBR latex, BR latex, and polyisoprene rubber latex are more preferred among these, with natural rubber latex being particularly preferred.

Natural rubber latex, which is collected as sap of natural rubber trees such as hevea trees, contains, in addition to a rubber component, water, proteins, lipids, inorganic salts, and other components. The gel fraction of the rubber is considered to be derived from a complex of various impurities therein. In the present invention, the natural rubber latex may be raw latex (field latex) taken from hevea trees by tapping, or concentrated latex prepared by concentration via centrifugation or creaming (e.g., purified latex, high ammonia latex prepared by adding ammonia in a conventional manner, or LATZ latex which has been stabilized with zinc oxide, TMTD, and ammonia).

The pH of the rubber latex is preferably 8.5 or higher, more preferably 9.5 or higher. A rubber latex having a pH lower than 8.5 tends to be unstable and easily coagulate. The pH of the rubber latex is preferably 12 or lower, more preferably 11 or lower. A rubber latex having a pH higher than 12 may be degraded.

The rubber latex may be prepared by conventionally known methods. Alternatively, it may be any of various commercial products. The rubber latex preferably has a rubber solids content of 10 to 80% by mass, more preferably 20 to 60% by mass.

The step (I) produces a masterbatch in which the chemically modified microfibrillated cellulose is uniformly dispersed in the rubber matrix. When the mixture obtained in the step (I) is in slurry form, the mixture may be coagulated

and dried by known methods, followed by kneading using a kneading machine such as a Banbury mixer to produce a masterbatch. Moreover, when the rubber component in the step (I) is a rubber latex, a mixture of the rubber latex and the chemically modified microfibrillated cellulose may be stirred with a homogenizer or other devices to give a dispersion, followed by coagulation and drying by known methods to produce a masterbatch. The masterbatch thus prepared may be kneaded with a filler and other compounding agents to provide a rubber composition of the present invention. Thus, another suitable embodiment of the present invention is a rubber composition which contains: a masterbatch including a rubber component and the chemically modified microfibrillated cellulose; and a filler, the chemically modified microfibrillated cellulose having a structure in which the hydroxyl hydrogen atoms of microfibrillated cellulose are partly substituted with a cationic group of a cationic group-containing compound.

In particular, the step (I) preferably includes a step (i) of mixing the chemically modified microfibrillated cellulose with a rubber latex to prepare a compounded latex, and a step (ii) of adjusting the pH of the compounded latex prepared in the step (i) to 6 to 7 to coagulate the compounded latex.

In the step (i), the chemically modified microfibrillated cellulose and a rubber latex are mixed and sufficiently stirred until they form a uniform dispersion to prepare a compounded latex (liquid mixture). The mixing may be carried out, for example: by dropwise adding an aqueous dispersion of the chemically modified microfibrillated cellulose to the rubber latex in a known agitator (e.g. a blender mill or a homogenizer) with stirring; or by dropwise adding the rubber latex to an aqueous dispersion of the chemically modified microfibrillated cellulose with stirring; or by adding an aqueous dispersion of the chemically modified microfibrillated cellulose to the rubber latex and then stirring the mixture.

The pH of the compounded latex is preferably 9.0 or higher, more preferably 9.5 or higher. A compounded latex having a pH lower than 9.0 tends to be unstable. The pH of the compounded latex is preferably 12 or lower, more preferably 11.5 or lower. A compounded latex having a pH higher than 12 may be degraded.

In the step (i), the chemically modified microfibrillated cellulose is preferably mixed with the rubber latex such that the amount of the chemically modified microfibrillated cellulose per 100 parts by mass of the rubber solids of the rubber latex is adjusted to 5 to 150 parts by mass. An amount of less than 5 parts by mass of the chemically modified microfibrillated cellulose tends to be too low to sufficiently achieve the effects of the present invention. The chemically modified microfibrillated cellulose in an amount of more than 150 parts by mass tends to be less uniformly dispersed. The amount of the chemically modified microfibrillated cellulose is more preferably 10 parts by mass or more, but is more preferably 100 parts by mass or less, still more preferably 70 parts by mass or less, further preferably 50 parts by mass or less, particularly preferably 30 parts by mass or less.

The mixing temperature and duration in the step (i) may be appropriately chosen to prepare a uniform compounded latex. For example, the mixing is preferably performed at 10°C to 40°C for 3 to 120 minutes, more preferably at 15°C to 30°C for 5 to 90 minutes.

In the step (ii), the pH of the compounded latex obtained in the step (i) is adjusted to 6 to 7 to coagulate the compounded latex. A pH lower than 6 tends to lead to poor dispersion of the chemically modified microfibrillated cellulose. A pH higher than 7 tends not to allow the coagulation to proceed, thereby resulting in poor dispersion of the chemically modified microfibrillated cellulose. Further, the resulting masterbatch may be easily degraded and show deteriorated processability.

To adjust the pH of the compounded latex to 6 to 7 to coagulate it, an acid is usually used as a coagulant and added to the compounded latex. Examples of the acid for coagulation include sulfuric acid, hydrochloric acid, formic acid, and acetic acid. The coagulation step is preferably performed at 10°C to 40°C.

A flocculant may be added to control the coagulation (size of the coagulated particle aggregates). Examples of the flocculant include cationic polymers.

The resulting coagula (aggregates including the coagulated rubber and the chemically modified microfibrillated cellulose) may be filtered and dried by known methods, and then optionally dried, followed by rubber kneading using a kneading machine such as a two-roll mill or a Banbury mixer to obtain a masterbatch in which the chemically modified microfibrillated cellulose is uniformly dispersed in the rubber matrix. The masterbatch may contain other components in addition to the rubber component and the chemically modified microfibrillated cellulose as long as the effects of the present invention are not impaired.

<Pneumatic tire>

The rubber composition of the present invention may be suitably used in pneumatic tires. Such pneumatic tires may be produced using the rubber composition by usual methods. Specifically, the unvulcanized rubber composition to which additives are added as needed may be extruded into the shape of a tire component, followed by building in a tire building machine in a usual manner to form an unvulcanized tire, which may then be heated and pressurized in a vulcanizer to produce a tire.

In the pneumatic tires of the present invention, at least the tire component to which the rubber composition of the present invention is applied has further reduced content of petroleum-derived components to give full consideration

to resource saving and environmental protection. Moreover, since at least the tire component to which the rubber composition of the present invention is applied is formed from a rubber composition which has excellent rigidity, tensile properties, and fuel economy while maintaining a good balance between them, the tires are not only environmentally friendly "eco tires" but also have excellent handling stability, durability, and rolling resistance properties while maintaining a good balance between them.

EXAMPLES

The present invention will be described in greater detail with reference to, but not limited to, examples.

The physical properties of chemically modified microfibrillated celluloses produced in the preparation examples described later were determined as follows.

[Degree of cation substitution]

A sample (chemically modified microfibrillated cellulose) was dried, and the nitrogen content of the dried sample was measured using a total nitrogen analyzer TN-10 (Mitsubishi Chemical Corp.). The degree of substitution was calculated using the equation below. The term "degree of substitution" refers to the average number of moles of substituents per mole of anhydroglucose unit (the average number of moles of substituents (cationic groups) introduced per mole of glucopyranose ring).

$$\text{Degree of cation substitution} = (162 \times N)/(1 - 116 \times N)$$

where N: nitrogen content

[Average fiber diameter, Average fiber length]

A 0.001% by mass aqueous dispersion of the chemically modified microfibrillated cellulose was prepared. The diluted dispersion was thinly spread on a mica sample stage and heat-dried at 50°C to prepare an analysis specimen. The specimen was analyzed using an atomic force microscope (AFM, Hitachi High-Tech Science Corporation, product name: Scanning probe microscope SPI3800N), and the cross-sectional height profile from the topographic image was measured to determine the average fiber diameter and average fiber length.

[Preparation of Chemically modified microfibrillated cellulose 1]

(Preparation Example 1)

A pulper capable of stirring pulp was charged with 200 g (dry weight) of pulp (NBKP, Nippon Paper Industries Co., Ltd.) and 24 g (dry weight) of sodium hydroxide, followed by adding water to adjust the pulp solids concentration to 15%. Then, the mixture was stirred at 30°C for 30 minutes and subsequently brought to 70°C, followed by adding 200 g (in terms of active substance) of 3-chloro-2-hydroxypropyltrimethylammonium chloride as a cationic agent (modifier). After one hour reaction, the reaction product was taken out, neutralized, and washed to obtain a cationically modified pulp with a degree of cation substitution per glucose unit of 0.05. The cationically modified pulp was adjusted to have a solids concentration of 1% and then treated twice at a temperature of 20°C and a pressure of 140 MPa using a high-pressure homogenizer to obtain Chemically modified microfibrillated cellulose 1. Chemically modified microfibrillated cellulose 1 had an average fiber diameter of 25 nm and an average fiber length of 1200 nm.

[Preparation of Chemically modified microfibrillated cellulose 2]

(Preparation Example 2)

A pulper capable of stirring pulp was charged with 200 g (dry weight) of pulp (NBKP, Nippon Paper Industries Co., Ltd.) and 24 g (dry weight) of sodium hydroxide, followed by adding water to adjust the pulp solids concentration to 15%. Then, the mixture was stirred at 30°C for 30 minutes and subsequently brought to 70°C, followed by adding 200 g (in terms of active substance) of 3-chloro-2-hydroxypropyltrimethylammonium chloride as a cationic agent (modifier). After one hour reaction, the reaction product was taken out, neutralized, and washed to obtain a cationically modified pulp with a degree of cation substitution per glucose unit of 0.05. To a 5% (w/v) slurry of the cationically modified pulp

was added hydrogen peroxide in an amount of 1% (w/v) relative to the cationically modified pulp, and the pH of the resulting slurry was adjusted to 12 with 1 M sodium hydroxide. This slurry was treated at 80°C for two hours and then filtered through a glass filter and sufficiently washed with water (viscosity-reducing treatment: alkaline hydrolysis). The viscosity-reduced 1% (w/v) cationically modified pulp slurry was treated twice at a temperature of 20°C and a pressure of 140 MPa using a high-pressure homogenizer to obtain Chemically modified microfibrillated cellulose 2. Chemically modified microfibrillated cellulose 2 had an average fiber diameter of 25 nm and an average fiber length of 200 nm.

[Preparation of Chemically modified microfibrillated cellulose 3]

(Preparation Example 3)

A pulper capable of stirring pulp was charged with 200 g (dry weight) of pulp (NBKP, Nippon Paper Industries Co. , Ltd.) and 24 g (dry weight) of sodium hydroxide, followed by adding water to adjust the pulp solids concentration to 15%. Then, the mixture was stirred at 30°C for 30 minutes and subsequently brought to 70°C, followed by adding 120 g (in terms of active substance) of 3-chloro-2-hydroxypropyltrimethylammonium chloride as a cationic agent (modifier). After one hour reaction, the reaction product was taken out, neutralized, and washed to obtain a cationically modified pulp with a degree of cation substitution per glucose unit of 0.03. The cationically modified pulp was adjusted to have a solids concentration of 1% and then treated twice at a temperature of 20°C and a pressure of 140 MPa using a high-pressure homogenizer to obtain Chemically modified microfibrillated cellulose 3. Chemically modified microfibrillated cellulose 3 had an average fiber diameter of 40 nm and an average fiber length of 1200 nm.

The agents used in production examples are listed below.

Natural rubber latex: field latex available from Muhibbah LATEKS

Chemically modified microfibrillated cellulose 1: Chemically modified microfibrillated cellulose 1 produced in Preparation Example 1

Chemically modified microfibrillated cellulose 2: Chemically modified microfibrillated cellulose 2 produced in Preparation Example 2

Chemically modified microfibrillated cellulose 3: Chemically modified microfibrillated cellulose 3 produced in Preparation Example 3

[Preparation of masterbatch]

(Production Example 1)

To 1000 g of Chemically modified microfibrillated cellulose 1 was added 1000 g of pure water to prepare a 0.5% by mass (solids concentration) suspension of the chemically modified microfibrillated cellulose. The suspension was treated in a high speed homogenizer ("T50" available from IKA Japan, rotation speed: 8000 rpm) for about 10 minutes to prepare a uniform aqueous dispersion (viscosity: 7 to 8 mPa·s).

The aqueous dispersion was mixed with natural rubber latex (solids concentration (DRC): 30% by mass) such that the dry weight of the solids of the chemically modified microfibrillated cellulose was 20 parts by mass per 100 parts by mass of the solids of the natural rubber latex. The mixture was stirred using a high speed homogenizer ("T50" available from IKA Japan, rotation speed: 8000 rpm) for about five minutes to prepare a rubber latex dispersion. Subsequently, a 2% by mass formic acid aqueous solution as a coagulant was added to the dispersion with slow stirring using an Eurostar (IKA Japan) to adjust the pH to 6 to 7, thereby obtaining coagula. The coagula were filtered and dried at 40°C for 12 hours to obtain Masterbatch 1.

The pH was measured with a pH meter "D51T" available from Horiba, Ltd.

(Production Example 2)

Masterbatch 2 was prepared as in Production Example 1, except that Chemically modified microfibrillated cellulose 2 was used instead of Chemically modified microfibrillated cellulose 1.

(Production Example 3)

Masterbatch 3 was prepared as in Production Example 1, except that Chemically modified microfibrillated cellulose 3 was used instead of Chemically modified microfibrillated cellulose 1.

(Production Example 4)

To 500 g of a microfibrillated cellulose (product name "BiNFi-s cellulose", biomass nanofiber, available from Sugino Machine Limited, solids content: 2% by mass, moisture content: 98% by mass, average fiber diameter: 20 to 50 nm, average fiber length: 500 to 1000 nm) was added 1000 g of pure water to prepare a 0.5% by mass (solids concentration) suspension of the microfibrillated cellulose. The suspension was treated in a high speed homogenizer ("T50" available from IKA Japan, rotation speed: 8000 rpm) for about 10 minutes to prepare a uniform aqueous dispersion (viscosity: 7 to 8 mPa·s).

The aqueous dispersion was mixed with natural rubber latex (solids concentration (DRC): 30% by mass) such that the dry weight of the solids of the microfibrillated cellulose was 20 parts by mass per 100 parts by mass of the solids of the natural rubber latex. The mixture was stirred using a high speed homogenizer ("T50" available from IKA Japan, rotation speed: 8000 rpm) for about five minutes to prepare a rubber latex dispersion. The rubber latex dispersion was dried at 40°C for 12 hours to obtain Masterbatch 4.

The agents used in examples and comparative examples are listed below.

Natural rubber: TSR20
Polybutadiene rubber: BR150B (cis content: 97% by mass, $ML_{1+4}$ (100°C): 40) available from Ube Industries, Ltd.

Masterbatch 1: Masterbatch 1 prepared in Production Example 1
Masterbatch 2: Masterbatch 2 prepared in Production Example 2
Masterbatch 3: Masterbatch 3 prepared in Production Example 3
Masterbatch 4: Masterbatch 4 prepared in Production Example 4

Carbon black: SHOBLACK N550 ($N_2SA$: 42 $m^2/g$) available from Cabot Japan K.K.

Antioxidant: Nocrac 6C (N-phenyl-N'-(1,3-dimethylbutyl)-p-phenylenediamine, 6PPD) available from Ouchi Shinko Chemical Industrial Co., Ltd.

Zinc oxide: Zinc oxide #2 available from Mitsui Mining and Smelting Co., Ltd.

Stearic acid: stearic acid beads "Tsubaki" available from NOF Corporation

Sulfur: Seimi Sulfur (oil content: 10%) available from Nippon Kanryu Industry Co., Ltd.

Vulcanization accelerator: NOCCELER NS (N-t-butyl-2-benzothiazolesulfenamide, TBBS) available from Ouchi Shinko Chemical Industrial Co., Ltd.

(Examples and Comparative Examples)

The materials other than the sulfur and vulcanization accelerator in the formulation amounts indicated in Table 1, 2, or 3 were kneaded using a 1.7 L Banbury mixer (Kobe Steel, Ltd.) to give a kneaded mixture. Then, the sulfur and vulcanization accelerator were added to the kneaded mixture, and they were kneaded using an open roll mill to obtain an unvulcanized rubber composition. The unvulcanized rubber composition was press-vulcanized to obtain a vulcanized rubber composition.

The vulcanized rubber compositions prepared as above were evaluated as described below. Tables 1 to 3 show the results.

In Tables 1 to 3, the amount of the microfibrillated cellulose means the amount of the chemically modified microfibrillated cellulose or unmodified microfibrillated cellulose per 100 parts by mass of the rubber component.

(Dispersion of microfibrillated cellulose; Dispersion of fibers)

The cross sections of specimens prepared from the vulcanized rubber compositions of the examples and comparative examples were observed with an optical microscope (magnification: ×500) and evaluated for dispersion based on the following criteria.

A: No aggregates observed.
B: Fine aggregates observed.
C: Larger, not fine aggregates observed.
D: Large aggregates observed.

(Viscoelasticity test)

Specimens cut from the vulcanized rubber compositions were measured for complex modulus E*a (MPa) in the tire circumferential direction, complex modulus E*b (MPa) in the tire radial direction, and loss tangent (tan $\delta$) using

a viscoelastic spectrometer VES (Iwamoto Seisakusho Co., Ltd.) at a temperature of 70°C, a frequency of 10 Hz, an initial strain of 10%, and a dynamic strain of 2%. The term "tire circumferential direction" refers to the extrusion direction (machine direction) of the vulcanized rubber composition, and the term "tire radial direction" refers to the direction orthogonal to the extrusion direction.

The E*a, E*b, and tan δ values of the example and comparative examples in Table 1 are expressed as indices (modulus a index, modulus b index, and rolling resistance index, respectively), with Comparative Example 1 set equal to 100. A higher modulus index indicates a higher rigidity and thus better handling stability. A higher rolling resistance index indicates a lower rolling resistance and thus better low heat build-up properties (better fuel economy).

$$(\text{Modulus a index}) = (\text{E*a of each formulation example})/(\text{E*a of Comparative Example 1}) \times 100$$

$$(\text{Modulus b index}) = (\text{E*b of each formulation example})/(\text{E*b of Comparative Example 1}) \times 100$$

$$(\text{Rolling resistance index}) = (\tan\delta \text{ of Comparative Example 1})/(\tan\delta \text{ of each formulation example}) \times 100$$

As for the example and comparative examples in Table 1 where Comparative Example 1 was regarded as the standard, a modulus a index of 150 or higher was judged as particularly good; a modulus b index of 140 or higher was judged as particularly good; and a rolling resistance index of 65 or higher was judged as good with practically sufficient fuel economy.

The E*a, E*b, and tan δ values of the examples and comparative examples in Table 2 are expressed as indices (modulus a index, modulus b index, and rolling resistance index, respectively), with Comparative Example 4 set equal to 100. A higher modulus index indicates a higher rigidity and thus better handling stability. A higher rolling resistance index indicates a lower rolling resistance and thus better low heat build-up properties (better fuel economy).

$$(\text{Modulus a index}) = (\text{E*a of each formulation example})/(\text{E*a of Comparative Example 4}) \times 100$$

$$(\text{Modulus b index}) = (\text{E*b of each formulation example})/(\text{E*b of Comparative Example 4}) \times 100$$

$$(\text{Rolling resistance index}) = (\tan\delta \text{ of Comparative Example 4})/(\tan\delta \text{ of each formulation example}) \times 100$$

As for the examples and comparative examples in Table 2 where Comparative Example 4 was regarded as the standard, a modulus a index of 130 or higher was judged as particularly good; a modulus b index of 105 or higher was judged as particularly good; and a rolling resistance index of 80 or higher was judged as good with practically sufficient fuel economy.

The E*a, E*b, and tan δ values of the examples and comparative examples in Table 3 are expressed as indices (modulus a index, modulus b index, and rolling resistance index, respectively), with Comparative Example 11 set equal to 100. A higher modulus index indicates a higher rigidity and thus better handling stability. A higher rolling resistance index indicates a lower rolling resistance and thus better low heat build-up properties (better fuel economy).

$$(\text{Modulus a index}) = (\text{E*a of each formulation example})/(\text{E*a of Comparative Example 11}) \times 100$$

$$(\text{Modulus b index}) = (\text{E*b of each formulation example})/(\text{E*b of Comparative Example 11}) \times 100$$

$$(\text{Rolling resistance index}) = (\tan\delta \text{ of Comparative Example 11})/(\tan\delta \text{ of each formulation example}) \times 100$$

As for the examples and comparative examples in Table 3 where Comparative Example 11 was regarded as the standard, a modulus a index of 150 or higher was judged as particularly good; a modulus b index of 110 or higher was judged as particularly good; and a rolling resistance index of 70 or higher was judged as good with practically sufficient fuel economy.

(Tensile test)

No. 3 dumbbell-shaped specimens prepared from the vulcanized rubber compositions were subjected to a tensile test in accordance with JIS K6251 "Rubber, vulcanized or thermoplastic - Determination of tensile stress-strain properties" to measure the tensile strength at break (tensile strength; TB (MPa)) of the vulcanized rubber compositions.
The TB values of the example and comparative examples in Table 1 are expressed as an index (tensile strength index) using the equation below, with Comparative Example 1 set equal to 100. A higher tensile strength index indicates a higher tensile strength and thus better durability.

$$(\text{Tensile strength index}) = (\text{TB of each formulation example})/(\text{TB of Comparative Example 1}) \times 100$$

As for the example and comparative examples in Table 1 where Comparative Example 1 was regarded as the standard, a tensile strength index of 82 or higher was judged as good with practically sufficient tensile strength.
The TB values of the examples and comparative examples in Table 2 are expressed as an index (tensile strength index) using the equation below, with Comparative Example 4 set equal to 100. A higher tensile strength index indicates a higher tensile strength and thus better durability.

$$(\text{Tensile strength index}) = (\text{TB of each formulation example})/(\text{TB of Comparative Example 4}) \times 100$$

As for the examples and comparative examples in Table 2 where Comparative Example 4 was regarded as the standard, a tensile strength index of 80 or higher was judged as good with practically sufficient tensile strength.
The TB values of the examples and comparative examples in Table 3 are expressed as an index (tensile strength index) using the equation below, with Comparative Example 11 set equal to 100. A higher tensile strength index indicates a higher tensile strength and thus better durability.

$$(\text{Tensile strength index}) = (\text{TB of each formulation example})/(\text{TB of Comparative Example 11}) \times 100$$

As for the examples and comparative examples in Table 3 where Comparative Example 11 was regarded as the standard, a tensile strength index of 80 or higher was judged as good with practically sufficient tensile strength.

(Tire performance balance index)

A tire performance balance index was calculated from the indices using the equation below. A higher index indicates a better balance of rigidity, tensile strength, and fuel economy.

$$(\text{Balance index}) = (\text{modulus a index}) \times (\text{tensile strength index}) \times (\text{rolling resistance index})/10000$$

(Processability: measurement of Mooney viscosity)

The Mooney viscosity of the unvulcanized rubber compositions was measured at 130°C by a method in accordance with JIS K6300.

The Mooney viscosities ($ML_{1+4}$) of the example and comparative examples in Table 1 are expressed as an index (Mooney viscosity index) using the equation below, with Comparative Example 1 set equal to 100. A higher Mooney viscosity index indicates better processability.

(Mooney viscosity index) = (Mooney viscosity of each formulation example)/(Mooney viscosity of Comparative Example 1) × 100

As for the example and comparative examples in Table 1 where Comparative Example 1 was regarded as the standard, a Mooney viscosity index of 100 or higher was judged as good with practically sufficient processability.

The Mooney viscosities ($ML_{1+4}$) of the examples and comparative examples in Table 2 are expressed as an index (Mooney viscosity index) using the equation below, with Comparative Example 4 set equal to 100. A higher Mooney viscosity index indicates better processability.

(Mooney viscosity index) = (Mooney viscosity of each formulation example)/(Mooney viscosity of Comparative Example 4) × 100

As for the examples and comparative examples in Table 2 where Comparative Example 4 was regarded as the standard, a Mooney viscosity index of 100 or higher was judged as good with practically sufficient processability.

The Mooney viscosities ($ML_{1+4}$) of the examples and comparative examples in Table 3 are expressed as an index (Mooney viscosity index) using the equation below, with Comparative Example 11 set equal to 100. A higher Mooney viscosity index indicates better processability.

(Mooney viscosity index) = (Mooney viscosity of each formulation example)/(Mooney viscosity of Comparative Example 11) × 100

As for the examples and comparative examples in Table 3 where Comparative Example 11 was regarded as the standard, a Mooney viscosity index of 100 or higher was judged as good with practically sufficient processability.

[Table 1]

| | | Comparative Example 1 | Comparative Example 2 | Comparative Example 3 | Example 1 |
|---|---|---|---|---|---|
| Amount (parts by mass) | Natural rubber | 50 | 50 | 50 | 50 |
| | Masterbatch 1 | — | 60 | — | 60 |
| | Masterbatch 4 | 60 | — | 60 | — |
| | Carbon black | — | — | 50 | 50 |
| | Antioxidant | 2 | 2 | 2 | 2 |
| | Zinc oxide | 3 | 3 | 3 | 3 |
| | Stearic acid | 2 | 2 | 2 | 2 |
| | Sulfur | 1.5 | 1.5 | 1.5 | 1.5 |
| | Vulcanization accelerator | 1 | 1 | 1 | 1 |
| | Microfibrillated cellulose amount (parts by mass) | 10 | 10 | 10 | 10 |
| Evaluation | Dispersion of microfibrillated cellulose | C | C | B | A |
| | Modulus a index (in circumferential direction) | 100 | 110 | 250 | 280 |
| | Modulus b index (in radial direction) | 100 | 100 | 135 | 150 |
| | Tensile strength index | 100 | 115 | 80 | 85 |
| | Rolling resistance index [fuel economy] | 100 | 100 | 60 | 68 |
| | Balance index | 100 | 127 | 120 | 161 |
| | Mooney viscosity index [processability] | 100 | 100 | 101 | 100 |

[Table 2]

| | | Comparative Example 4 | Example 1 | Example 2 | Example 3 | Example 4 | Example 5 | Example 6 | Comparative Example 5 | Comparative Example 6 |
|---|---|---|---|---|---|---|---|---|---|---|
| Amount (parts by mass) | Natural rubber | 100 | 50 | 75 | 50 | 75 | 50 | 75 | 50 | 75 |
| | Masterbatch 1 | — | 60 | 30 | — | — | — | — | — | — |
| | Masterbatch 2 | — | — | — | 60 | 30 | — | — | — | — |
| | Masterbatch 3 | — | — | — | — | — | 60 | 30 | — | — |
| | Masterbatch 4 | — | — | — | — | — | — | — | 60 | 30 |
| | Carbon black | 50 | 50 | 50 | 50 | 50 | 50 | 50 | 50 | 50 |
| | Antioxidant | 2 | 2 | 2 | 2 | 2 | 2 | 2 | 2 | 2 |
| | Zinc oxide | 3 | 3 | 3 | 3 | 3 | 3 | 3 | 3 | 3 |
| | Stearic acid | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 |
| | Vulcanization accelerator | 1 | 1 | 1 | 1 | 1 | 1 | 1 | 1 | 1 |
| | Microfibrillated cellulose amount (parts by mass) | — | 10 | 5 | 10 | 5 | 10 | 5 | 10 | 5 |
| Evaluation | Dispersion of microfibrillated cellulose | — | A | A | A | A | A | A | B | B |
| | Modulus a index (in circumferential direction) | 100 | 200 | 150 | 180 | 130 | 225 | 170 | 150 | 130 |
| | Modulus b index (in radial direction) | 100 | 120 | 110 | 115 | 108 | 130 | 118 | 102 | 100 |
| | Tensile strength index | 100 | 85 | 89 | 93 | 97 | 86 | 88 | 65 | 69 |
| | Rolling resistance index [fuel economy] | 100 | 99 | 105 | 100 | 103 | 85 | 89 | 60 | 65 |
| | Balance index | 100 | 168 | 140 | 167 | 130 | 164 | 133 | 59 | 58 |
| | Mooney viscosity index [processability] | 100 | 100 | 102 | 101 | 100 | 100 | 101 | 100 | 100 |

[Table 3]

| | | Comparative Example 11 | Example 11 | Example 12 | Example 13 | Example 14 | Example 15 | Example 16 | Comparative Example 12 | Comparative Example 13 |
|---|---|---|---|---|---|---|---|---|---|---|
| Amount (parts by mass) | Natural rubber | 50 | - | 25 | - | 25 | - | 25 | - | 25 |
| | Polybutadiene rubber | 50 | 50 | 50 | 50 | 50 | 50 | 50 | 50 | 50 |
| | Masterbatch 1 | - | 60 | 30 | - | - | - | - | - | - |
| | Masterbatch 2 | - | - | - | 60 | 30 | - | - | - | - |
| | Masterbatch 3 | - | - | - | - | - | 60 | 30 | - | - |
| | Masterbatch 4 | - | - | - | - | - | - | - | 60 | 30 |
| | Carbon black | 50 | 50 | 50 | 50 | 50 | 50 | 50 | 50 | 50 |
| | Antioxidant | 2 | 2 | 2 | 2 | 2 | 2 | 2 | 2 | 2 |
| | Zinc oxide | 3 | 3 | 3 | 3 | 3 | 3 | 3 | 3 | 3 |
| | Stearic acid | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 |
| | Vulcanization accelerator | 1 | 1 | 1 | 1 | 1 | 1 | 1 | 1 | 1 |
| | Microfibrillated cellulose amount (parts by mass) | - | 10 | 5 | 10 | 5 | 10 | 5 | 10 | 5 |
| Evaluation | Dispersion of microfibrillated cellulose | - | A | A | A | A | A | A | B | B |
| | Modulus a index (in circumferential direction) | 100 | 320 | 200 | 220 | 153 | 350 | 230 | 180 | 150 |
| | Modulus b index (in radial direction) | 100 | 150 | 135 | 135 | 120 | 160 | 138 | 105 | 100 |
| | Tensile strength index | 100 | 85 | 90 | 106 | 108 | 95 | 99 | 68 | 70 |
| | Rolling resistance index [fuel economy] | 100 | 79 | 88 | 81 | 85 | 75 | 80 | 55 | 60 |
| | Balance index | 100 | 215 | 158 | 189 | 140 | 249 | 182 | 67 | 63 |
| | Mooney viscosity index [processability] | 100 | 100 | 101 | 100 | 100 | 100 | 100 | 100 | 100 |

As demonstrated in Tables 1 to 3, when rubber compositions were prepared which contained: a rubber component; a chemically modified microfibrillated cellulose having a structure in which the hydroxyl hydrogen atoms of microfibrillated cellulose were partly substituted with a cationic group of a cationic group-containing compound; and a filler, the combined use of the chemically modified microfibrillated cellulose according to the present invention and the filler improved the dispersion of the chemically modified microfibrillated cellulose in the rubber composition, and therefore the resulting rubber compositions were excellent in processability and further had excellent rigidity, tensile properties, and fuel economy while maintaining a good balance between them. It is thus found that such rubber compositions can be used to produce pneumatic tires with high productivity which provide excellent handling stability, durability, and rolling resistance properties while maintaining a good balance between them. Moreover, the effect was found to be significant compared to the dispersion-improving effect obtained when an unmodified microfibrillated cellulose, which was outside the scope of the present invention, was used with the filler. It is also demonstrated that, in the rubber compositions with the above-mentioned features, the chemically modified microfibrillated cellulose was well dispersed in the rubber, and excellent rigidity was achieved not only in the tire circumferential direction but also in the tire radial direction. This means that the produced pneumatic tires further have very excellent handling stability.

Particularly, Table 1 demonstrates that the combined use of the chemically modified microfibrillated cellulose according to the present invention and the filler synergistically improved the dispersion of the chemically modified microfibrillated cellulose in the rubber composition, and therefore the resulting rubber composition was excellent in processability and further had synergistically excellent rigidity, tensile properties, and fuel economy while maintaining a good balance between them.

## Claims

**1.** A rubber composition, comprising:

a rubber component;
a chemically modified microfibrillated cellulose; and
a filler,

the chemically modified microfibrillated cellulose having a structure in which hydroxyl hydrogen atoms of microfibrillated cellulose are partly substituted with a cationic group of a cationic group-containing compound.

**2.** The rubber composition according to claim 1,
wherein the chemically modified microfibrillated cellulose has a degree of substitution with the cationic group of 0.01 to 0.5.

**3.** The rubber composition according to claim 1 or 2,
wherein the filler is present in an amount of 5 to 200 parts by mass per 100 parts by mass of the rubber component.

**4.** The rubber composition according to any one of claims 1 to 3,
wherein the chemically modified microfibrillated cellulose is present in an amount of 0.5 to 20 parts by mass per 100 parts by mass of the rubber component.

**5.** The rubber composition according to any one of claims 1 to 4,
wherein the chemically modified microfibrillated cellulose has an average fiber length of not less than 100 nm but not more than 5 μm.

**6.** The rubber composition according to any one of claims 1 to 5,
wherein the chemically modified microfibrillated cellulose has an average fiber diameter of 2 to 500 nm.

**7.** A pneumatic tire, formed from the rubber composition according to any one of claims 1 to 6.

## INTERNATIONAL SEARCH REPORT

International application No. PCT/JP2017/010416

A. CLASSIFICATION OF SUBJECT MATTER
*C08L21/00*(2006.01)i, *B60C1/00*(2006.01)i, *C08K3/00*(2006.01)i, *C08K7/02*(2006.01)i, *C08L1/00*(2006.01)i, *C08L21/02*(2006.01)i

According to International Patent Classification (IPC) or to both national classification and IPC

B. FIELDS SEARCHED

Minimum documentation searched (classification system followed by classification symbols)
C08L21/00, B60C1/00, C08K3/00, C08K7/02, C08L1/00, C08L21/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2014/142319 A1 (Bridgestone Corp., Mitsubishi Chemical Corp., Oji Holdings Corp.), 18 September 2014 (18.09.2014), claims 1 to 12; paragraphs [0021], [0075], [0081], [0099], [0111], [0116] & US 2016/0032086 A1 claims 1 to 12; paragraphs [0026], [0088], [0107]; tables 1, 2 & EP 2975084 A1 & CN 105164194 A | 1-7 |
| X | JP 2014-218598 A (Bridgestone Corp., Oji Holdings Corp., Mitsubishi Chemical Corp.), 20 November 2014 (20.11.2014), claims 1 to 7; paragraphs [0006], [0022], [0025], [0026], [0075], [0082], [0096], [0100], [0101], [0108], [0109], [0113] (Family: none) | 1-7 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 24 April 2017 (24.04.17) | 09 May 2017 (09.05.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

**INTERNATIONAL SEARCH REPORT**

International application No.
PCT/JP2017/010416

C (Continuation). DOCUMENTS CONSIDERED TO BE RELEVANT

| Category* | Citation of document, with indication, where appropriate, of the relevant passages | Relevant to claim No. |
|---|---|---|
| A | WO 03/070824 A1 (Asahi Kasei Corp.), 28 August 2003 (28.08.2003), page 11, line 27 to page 12, line 3 & US 2005/0154094 A1 paragraph [0071] & EP 1477524 A1 & TW 200303889 A & CN 1636033 A | 1-7 |
| A | JP 2007-138055 A (Koyo Sangyo Co., Ltd.), 07 June 2007 (07.06.2007), paragraph [0011] (Family: none) | 1-7 |
| A | JP 2009-516032 A (Sain Mohini M.), 16 April 2009 (16.04.2009), paragraph [0011] & US 2009/0065975 A1 paragraph [0018] & WO 2007/056839 A1 & EP 1957248 A1 & KR 10-2014-0006113 A | 1-7 |
| A | JP 2-281054 A (Nichigo Gomu Kako Kabushiki Kaisha), 16 November 1990 (16.11.1990), page 3, upper left column, lines 2 to 5 (Family: none) | 1-7 |
| A | JP 2009-191198 A (Bridgestone Corp.), 27 August 2009 (27.08.2009), paragraph [0004] (Family: none) | 1-7 |
| A | JP 2009-191197 A (Bridgestone Corp.), 27 August 2009 (27.08.2009), paragraphs [0001], [0004], [0028] (Family: none) | 1-7 |
| A | WO 2011/096399 A1 (Kyoto University), 11 August 2011 (11.08.2011), paragraph [0036] & JP 5717656 B2 | 1-7 |
| A | JP 2011-162608 A (Kyoto University), 25 August 2011 (25.08.2011), claims 1, 2 & US 2013/0005869 A1 claims 1, 2 & EP 2532774 A1 & CN 102812169 A | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005133025 A
- JP 2005075856 A
- JP 2014218598 A
- JP 2011162608 A